# EUROPEAN PATENT APPLICATION

(11) **EP 4 723 338 A1**
(43) Date of publication of application: **08.04.2026**
(21) Application number: 23939299.6
(22) Date of filing: 23.11.2023
(51) Int. Cl.: H01M 50/298, H01M 50/244

(54) **ELECTRICAL CONNECTION ASSEMBLY, BATTERY PACK, AND ELECTRIC APPARATUS**

(30) Priority: 31.05.2023 CN 202321360139 U
(71) Applicant: BYD Company Limited, Shenzhen, Guangdong 518118 (CN)
(72) Inventor: WANG, Yalei, Shenzhen, Guangdong 518118 (CN); WANG, Zhijie, Shenzhen, Guangdong 518118 (CN); WU, Xiangang, Shenzhen, Guangdong 518118 (CN); LAI, Qing, Shenzhen, Guangdong 518118 (CN); ZHENG, Jianwu, Shenzhen, Guangdong 518118 (CN)
(74) Representative: Taor, Simon Edward William
(86) International application number: PCT/CN2023/133615
(87) International publication number: WO 2024/244329

(57) **Abstract**

An electric connection assembly (20), a battery pack (10) using the electric connection assembly (20), and an electric apparatus using the battery pack (10). The electric connection assembly (20) comprises: a first connecting member (210), which comprises a first connection end and a second connection end, wherein the first connection end is adapted to be electrically connected to a first electrical assembly; a second connecting member (220), which comprises a third connection end and a fourth connection end, wherein the third connection end is adapted to be electrically connected to a second electrical assembly; and a first housing (230), in which an accommodating cavity (250) is formed, wherein the accommodating cavity (250) has an opened side, the second connection end and the fourth connection end are adapted to be accommodated in the accommodating cavity (250) via the opened side and are in electric connection with each other, and the opened side is formed as an adhesive injection opening, which is configured to inject an insulating adhesive into the accommodating cavity so as to coat the second connection end and the fourth connection end.

## Description

### CROSS-REFERENCE TO RELATED APPLICATIONS

This application claims priority to Chinese Patent Application No. "202321360139.8", filed by BYD Company Limited on May 31, 2023 and entitled "ELECTRIC CONNECTION ASSEMBLY, BATTERY PACK, AND ELECTRIC APPARATUS", which is incorporated herein by reference in its entirety.

### TECHNICAL FIELD

This application relates to the field of batteries, and in particular, to an electric connection assembly, a battery pack, and an electric apparatus.

### BACKGROUND

Currently, to achieve an electric connection between electrical assemblies inside a battery pack, busbars are usually required, and a cross-connection between busbars is inevitably present. A riveting and welding process is usually used at the cross-connection between the busbars. Conventional mica + PI protection cannot be used for insulation at the cross-connection. Therefore, a glue application solution is selected. Controllability of glue application is poor, making it impossible to ensure insulation reliability. Insulation failure may easily lead to a safety hazard.

### SUMMARY

This application is intended to resolve one of the technical problems in the related art at least to some extent.

In view of this, this application provides an electric connection assembly.

An electric connection assembly includes: a first connection member, including a first connection end and a second connection end, where the first connection end is suitable for being electrically connected to a first electrical assembly; a second connection member, including a third connection end and a fourth connection end, where the third connection end is suitable for being electrically connected to a second electrical assembly; and a first housing, where an accommodating cavity is formed in the first housing, and the accommodating cavity has an open side. The second connection end and the fourth connection end are suitable for being accommodated in the accommodating cavity via the open side and are electrically connected. The open side is formed as a potting port for injection of an insulating adhesive into the accommodating cavity to cover the second connection end and the fourth connection end.

The electric connection assembly in this application may improve reliability of a connection between electrical assemblies, and reduce or eliminate a risk of insulation failure.

This application further provides a battery pack. The battery pack includes the electric connection assembly.

This application further provides an electric apparatus. The electric apparatus includes the battery pack.

Additional aspects and advantages of this application will be set forth in part in the following description, and in part will become apparent from the following description, or may be learned through the practice of this application.

### BRIEF DESCRIPTION OF DRAWINGS

FIG. 1 is a diagram of a logical structure of an electric apparatus according to an embodiment of this application;
FIG. 2 is a diagram of a structure of a battery pack according to an embodiment of this application;
FIG. 3 is a partial diagram of a partial structure of a battery pack shown in FIG. 2;
FIG. 4 is a diagram of a structure of a tray and a plurality of electric connection assemblies in a battery pack shown in FIG. 2;
FIG. 5 is a diagram of a structure of an electric connection assembly in a battery pack shown in FIG. 2;
FIG. 6 is a diagram of a partial structure of an electric connection assembly shown in FIG. 5; and
FIG. 7 is an exploded view of an electric connection assembly shown in FIG. 5.

### DESCRIPTION OF EMBODIMENTS

Embodiments of this application are described in detail below, examples of which are illustrated in the accompanying drawings, where same or similar reference numerals throughout indicate same or similar elements or elements having same or similar functions. The embodiments described below with reference to the accompanying drawings are examples and are intended to explain this application, and shall not be construed as a limitation on this application.

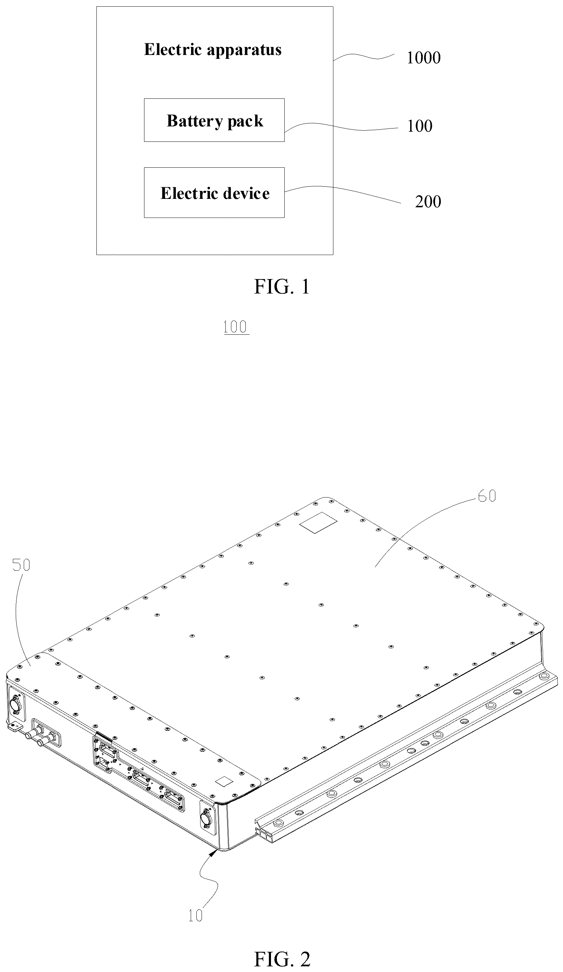

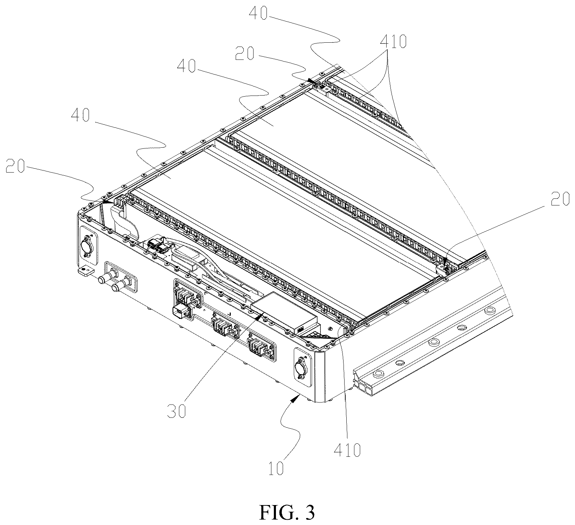

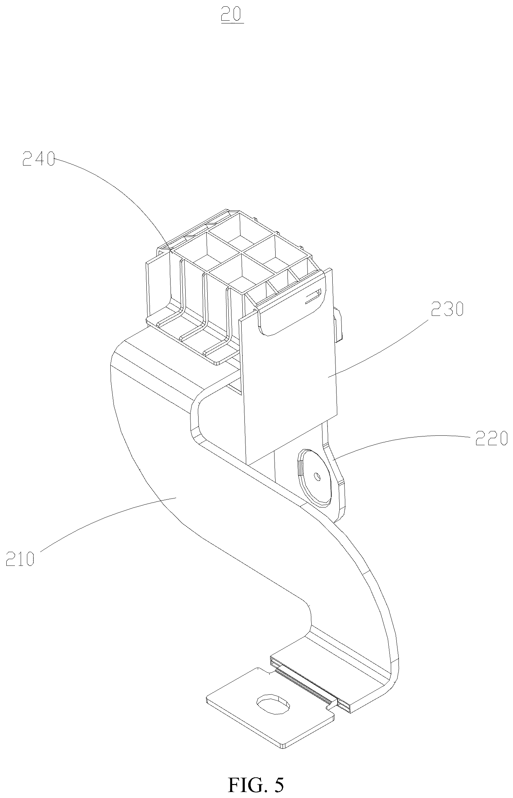

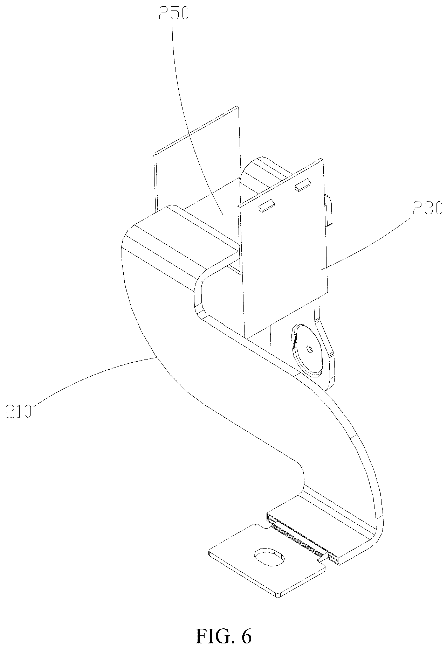

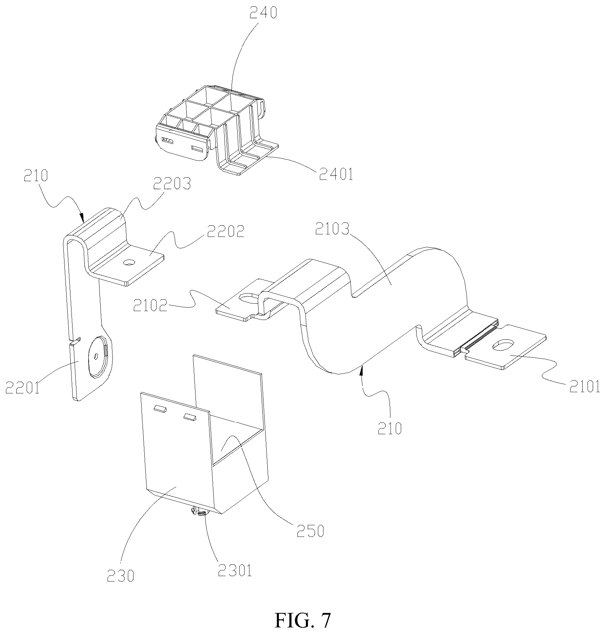

Referring to FIG. 1 to FIG. 7, some example implementations of an electric apparatus 1000, a battery pack 100, and an electric connection assembly 20 in this application are shown.

As shown in FIG. 1, the electric apparatus 1000 includes the battery pack 100 and an electric device 200. The battery pack 100 is electrically connected to the electric device 200 to supply power to the electric device 200.

In some example implementations, the electric apparatus 1000 may be a vehicle, for example, a hybrid vehicle or an electric vehicle. The battery pack 100 is used as a power battery of the vehicle. Correspondingly, the electric device 200 may be a drive motor of the vehicle. It may be understood that the electric apparatus 1000 may be a device besides a vehicle, such as some ships, aircrafts, and the like. A form of the electric apparatus may be set according to an actual requirement. It is only needed to use the battery pack 100 in this application. Structures of the electric apparatus 1000 and the electric device 200 are not a focus of improvement in this application, and therefore are not described in detail.

In addition, referring to FIG. 2 to FIG. 7, in some example implementations, the battery pack 100 may include a tray 10, a partition member, at least two electrical assemblies, and an electric connection assembly 20.

An accommodating space 101 is formed in the tray 10 to accommodate the at least two electrical assemblies and the electric connection assembly 20.

The partition member is disposed in the tray 10, and partitions the accommodating space 101 into at least two accommodating cavities to correspondingly accommodate the at least two electrical assemblies. Each electrical assembly may be located in a separate accommodating cavity to achieve electrical isolation. The partition member may be an independent component. That is, the partition member is not included in a structure of the tray 10, or may be used as one of components of the tray 10. This may be set according to a requirement. An avoidance space (not shown in the figure) is formed on the partition member. The electric connection assembly 20 passes through the avoidance space to allow electric contacting between electrical assemblies in accommodating cavities on two sides of the partition member.

The electric connection assembly 20 includes a first connection member 210, a second connection member 220, and a first housing 230.

The first connection member 210 includes a first connection end and a second connection end. The first connection end is suitable for being electrically connected to a first electrical assembly. The second connection member 220 includes a third connection end and a fourth connection end. The third connection end is suitable for being electrically connected to a second electrical assembly.

An accommodating cavity 250 is formed in the first housing 230, and the accommodating cavity 250 has an open side.

The second connection end and the fourth connection end are suitable for being accommodated in the accommodating cavity via the open side, and the second connection end and the fourth connection end are electrically connected to each other. The open side is formed as a potting port for injection of an insulating adhesive into the accommodating cavity 250 to cover the second connection end and the fourth connection end that have been electrically connected. It should be noted that, in an actual application, the electric connection assembly 20 may be in a state in which insulating adhesive injection has not been completed.

The first connection end and the third connection end of the electric connection assembly are connected to two electrical assemblies in adjacent accommodating cavities, respectively; and the first housing 230 is accommodated in the avoidance space.

In the electric connection assembly 20, the accommodating cavity 250 is formed in the first housing 230. The accommodating cavity 250 has an open side. The second connection end and the fourth connection end may be accommodated in the accommodating cavity 250 via the open side. Correspondingly, a position in which the third connection end and the fourth connection end are electrically connected is also located in the accommodating cavity 250. The open side may be used as a potting port for injection of an insulating adhesive into the accommodating cavity 250 to cover the second connection end and the fourth connection end that have been connected. In this way, due to a constraint of the first housing 230, a glue injection position and a glue injection amount are both determined to be controllable. In addition, after glue injection is completed, a regular shape may be formed at connection and insulation positions of the first connection member 210 and the second connection member 220, so that fitting with shapes and positions of other electrical elements or structural elements. Correspondingly, the battery pack 100 using the electric connection assembly 20 and the electric apparatus 1000 using the battery pack 100 may also utilize an excellent characteristic of the electric connection assembly 20.

In one embodiment, the electrical assembly may include a power distribution assembly 30 and a battery assembly 40. Correspondingly, the battery pack 100 provided by this application may include a tray 10, an electric connection assembly 20, a power distribution assembly 30, and a battery assembly 40.

The accommodating space 101 is formed in the tray 10. The electric connection assembly 20, the power distribution assembly 30, and the battery assembly 40 may be accommodated in the accommodating space 101. The battery assembly 40 includes several battery cells 410 to store electric energy to supply power to the electric device 200. The power distribution assembly 30 generally exists in a form of a power distribution box for connection, disconnection, distribution of power, charging management of the battery assembly 40, and the like.

In an implementation, the battery pack 100 may include one battery assembly 40, or may include two or more battery assemblies 40. Each battery assembly 40 may include one battery cell 410. Generally, the battery assembly 40 includes a plurality of battery cells 410. The plurality of battery cells 410 may form a corresponding series or parallel connection according to a voltage output requirement of the battery pack 100. This may be set according to an actual requirement, which is not limited herein.

The tray 10 is provided with a partition member. The partition member partitions the accommodating space 101 into at least two accommodating cavities. One of the accommodating cavities is for accommodating the power distribution assembly 30, and other accommodating cavities are for accommodating the battery assembly 40. Certainly, among the at least two accommodating cavities, some of the accommodating cavities may also be for accommodating other assemblies besides the power distribution assembly 30 and the battery assembly 40 according to a requirement.

In some implementations, the at least two accommodating cavities include a power distribution cavity 140 and a battery cavity 150. The power distribution cavity 140 is for accommodating the power distribution assembly 30. The battery cavity 150 is for accommodating the battery assembly 40. One of the battery cavities 150 is adjacent to the power distribution cavity. The first connection end of the electric connection assembly is electrically connected to the power distribution assembly 30, and the third connection end of the electric connection assembly is electrically connected to the battery assembly 40. In an implementation, the accommodating space 101 in the tray 10 is usually partitioned by two or more partition members into one power distribution cavity 140 and a plurality of battery cavities 150. The power distribution assembly 30 accommodated in the power distribution cavity 150 is electrically connected to the battery assembly 40 in the battery cavity 150 adjacent to the power distribution cavity by one of the electric connection assemblies 20. Similarly, two battery assemblies 40 located in two adjacent battery cavities 150 are also electrically connected by the other electric connection assembly 20. A quantity of the electric connection assemblies 20 may be set according to a requirement.

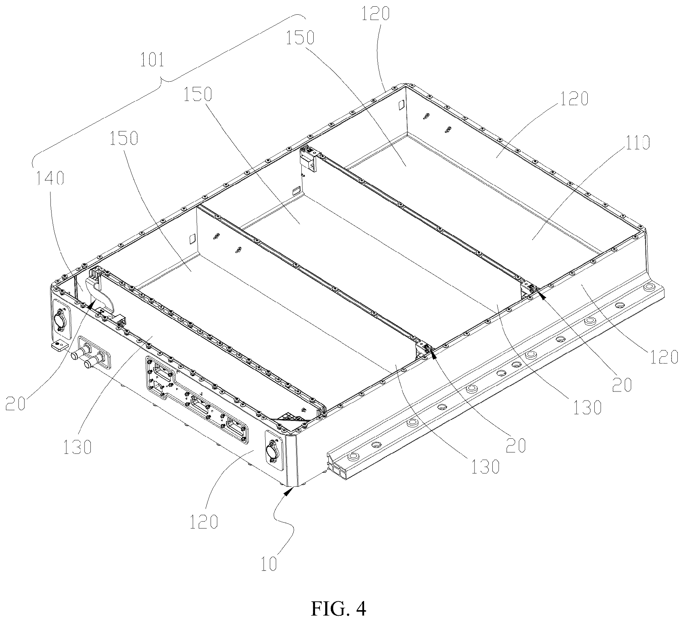

For example, as shown in FIG. 4, the accommodating space 101 in the tray 10 is partitioned into 1 power distribution cavity and 3 battery cavities by 3 partition members. The battery pack 100 includes 1 power distribution assembly and 3 battery assemblies.

In some implementations, the tray 10 includes a bottom plate 110, a plurality of side beams 120, and a plurality of cross beams 130. The plurality of side beams 120 are all connected to the bottom plate 110 and arranged along a circumferential direction of the bottom plate 110. The plurality of side beams 120 and the bottom plate 110 jointly define the accommodating space 101.

The plurality of cross beams 130 are disposed in the accommodating space 101 and are spaced. The cross beam 130 is used as the partition member to partition the accommodating space 101 into the plurality of accommodating cavities that are independent of each other.

One side of the cross beam 130 is fastened to the bottom plate 110 to reinforce the battery pack 100. The avoidance space is a notch formed on the other opposite side of the cross beam 130 and penetrating through the cross beam 130. A holding portion corresponding to the first housing 230 is formed on an inner wall of the notch. In an implementation, the holding portion may be a locking structure disposed separately, or may be an inner wall of the notch itself. It is only needed to achieve positioning and mounting of the first housing 230.

In some implementations, a first locking portion 2301 is formed on an outer side of the first housing 230, and the first locking portion is suitable for being locked with and fastened to an external apparatus. A locking hole may be formed on the inner wall of the notch of the cross beam 130. The first locking portion may be formed as a snap-fit on an outer side of the first housing. The first housing 230 is positioned and mounted in the notch of the cross beam 130 by engaging the snap-fit with the locking hole. Certainly, positions of the snap-fit and the locking hole are interchangeable, or may be set as other structures having an equivalent effect.

In some implementations, the electric connection assembly 20 may further include a second housing 240. The second housing 240 is for fitting with the first housing 230 to close the open side. The second housing 240 may include a second locking portion 2401. The second locking portion 2401 is suitable for being locked with and fastened to the external apparatus. In an implementation, the second housing 240 fits with the first housing, so that the open side of the first housing 230 may be closed. In this way, portions that are of the first connection member 210 and the second connection member 220 and that are located inside the first housing 230 are covered by an injected insulating adhesive, thereby forming a regular shape. In addition, the portions may also be used to fill a notch on the cross beam 130. In an implementation, the first housing 230 and the second housing 240 may be made of insulating materials to help ensure an insulation gap.

In some implementations, the first connection member 210 and the second connection member 220 may be copper bars or aluminum bars, and are disposed in a bent shape according to a requirement to meet requirements of electrically connecting different electrical assemblies and adapting to a shape-position relationship. For example, the first connection member 210 may include a first connection section 2101, a second connection section 2102, and a first extension section 2103 connected between the first connection section 2101 and the second connection section 2102. A free end of the first connection section 2101 forms the first connection end. A free end of the second connection section 2102 forms the second connection end. In addition, at least one of the first connection section 2101 and the second connection section 2102 forms, together with the first extension section 2103, a bend.

Correspondingly, the second connection member 220 includes a third connection section 2201, a fourth connection section 2202, and a second extension section 2203 connected between the third connection section 2201 and the fourth connection section 2202. A free end of the third connection section 2201 forms the third connection end. A free end of the fourth connection section 2202 forms the fourth connection end. At least one of the third connection section 2201 and the fourth connection section 2202 forms, together with the second extension section 2203, a bend.

In some implementations, the electric connection assembly 20 further includes a fastener (not shown in the figure). The second connection section 2102 and the fourth connection section 2202 are of a sheet-like structure. When accommodated in the accommodating cavity 250, the second connection section 2102 and the fourth connection section 2202 at least partially overlap and are fastened by using the fastener. For example, the second connection section 2102 and the fourth connection section 2202 each are provided with a fastening hole. The fastener passes through the fastening hole to fasten the second connection section 2102 and the fourth connection section 2202. The fastener may be a rivet, a screw, or the like, and may play a role in an auxiliary conductive connection while fastening the second connection section 2102 and the fourth connection section 2202.

In the description of this application, it should be understood that a directional or positional relationship indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like is based on a directional or positional relationship shown in the accompanying drawings, which is only for the purpose of facilitating the description of this application and simplifying the description, and is not intended to indicate or imply that an apparatus or element referred to must have a specific direction, be constructed and operated in a specific direction. Therefore, these terms should not be construed as limiting this application.

Furthermore, terms "first" and "second" are merely intended for a purpose of description, and cannot be understood as indicating or implying relative importance or implicitly indicating a quantity of indicated technical features. Therefore, a feature limited by "first" or "second" may explicitly or implicitly include one or more features. In the description of the present disclosure, "a plurality of" means more than two, unless otherwise clearly and specifically defined.

In this application, unless otherwise clearly specified and defined, a term "installation", "being connect to", "connection", "fastening", and the like should be understood in a broad sense, for example, may be a fixed connection, a detachable connection, or an integral connection; or may be a mechanical connection or an electric connection; or may be a direct connection, an indirect connection through an intermediary medium, an internal communication between two elements, or an interaction between two elements. For those of ordinary skill in the art, specific meanings of the foregoing terms in this application may be interpreted according to a specific condition.

In the present disclosure, unless otherwise clearly specified and defined, the description that a first feature is "above" or "below" a second feature may indicate a direct contact between the first feature and the second feature, or an indirect contact between the first feature and the second feature through an intermediary medium. Moreover, the description that the first feature is "above", "over" or "on" the second feature may indicate that the first feature is directly above or obliquely above the second feature, or simply indicate that the first feature is at a higher horizontal level than the second feature. The description that the first feature is "below", "beneath" or "under" the second feature may indicate that the first feature is directly below or obliquely below the second feature, or simply indicate that the first feature is at a lower horizontal level than the second feature.

In the description of this specification, descriptions referring to terms such as "one embodiment", "some embodiments", "an example", "a specific example", or "some examples", and the like mean that specific features, structures, materials, or characteristics described in connection with this embodiment or example are included in at least one embodiment or example of this application. In this specification, the schematic representations of the foregoing terms are not necessarily aimed at the same embodiment or example. Furthermore, specific features, structures, materials, or characteristics described may be combined in any one or more embodiments or examples in a suitable manner. In addition, a person skilled in the art may combine and integrate different embodiments or examples described in this specification and features of different embodiments or examples without contradiction.

Although embodiments of this application have been shown and described above, it should be understood that the foregoing embodiments are examples and should not be construed as limiting this application. A person skilled in the art may make changes, modifications, substitutions, and variations to the foregoing embodiments within the scope of this application.

## Claims

1. An electric connection assembly, comprising:
a first connection member, comprising a first connection end and a second connection end, wherein the first connection end is suitable for being electrically connected to a first electrical assembly;
a second connection member, comprising a third connection end and a fourth connection end, wherein the third connection end is suitable for being electrically connected to a second electrical assembly; and
a first housing, wherein an accommodating cavity is formed in the first housing, and the accommodating cavity has an open side; wherein
the second connection end and the fourth connection end are suitable for being accommodated in the accommodating cavity via the open side and are electrically connected; and the open side is formed as a potting port for injection of an insulating adhesive into the accommodating cavity to cover the second connection end and the fourth connection end.

2. The electric connection assembly according to claim 1, wherein the electric connection assembly further comprises a glue injection member, and the glue injection member is filled in the accommodating cavity and covers the second connection end and the fourth connection end.

3. The electric connection assembly according to claim 1 or 2, wherein a first locking portion is formed on an outer side of the first housing, and the first locking portion is suitable for being locked with and fastened to an external apparatus.

4. The electric connection assembly according to any one of claims 1 to 3, wherein the electric connection assembly further comprises a second housing, and the second housing is for fitting with the first housing to close the open side.

5. The electric connection assembly according to claim 4, wherein the second housing comprises a second locking portion, and the second locking portion is suitable for being locked with and fastened to the external apparatus.

6. The electric connection assembly according to any one of claims 1 to 5, wherein the first connection member comprises a first connection section, a second connection section, and a first extension section connected between the first connection section and the second connection section, a free end of the first connection section forms the first connection end, and a free end of the second connection section forms the second connection end; and
at least one of the first connection section and the second connection section forms, together with the first extension section, a bend.

7. The electric connection assembly according to any one of claims 1 to 6, wherein the second connection member comprises a third connection section, a fourth connection section, and a second extension section connected between the third connection section and the fourth connection section, a free end of the third connection section forms the third connection end, and a free end of the fourth connection section forms the fourth connection end; and
at least one of the third connection section and the fourth connection section forms, together with the second extension section, a bend.

8. The electric connection assembly according to any one of claims 1 to 7, wherein the electric connection assembly further comprises a fastener; and when the second connection section and the fourth connection section are of a sheet-like structure and are accommodated in the accommodating cavity, the second connection section and the fourth connection section at least partially overlap and are fastened by using the fastener.

9. The electric connection assembly according to claim 8, wherein the second connection section and the fourth connection section each are provided with a fastening hole, and the fastener passes through the fastening hole to fasten the second connection section and the fourth connection section.

10. The electric connection assembly according to claim 4 or 5, wherein the first housing and the second housing are made of insulating materials.

11. A battery pack, comprising:
a tray, wherein an accommodating space is formed in the tray;
a partition member, located in the accommodating space and partitioning the accommodating space into at least two accommodating cavities; wherein an avoidance space is formed on the partition member;
at least two electrical assemblies, correspondingly disposed in the at least two accommodating cavities; and
the electric connection assembly according to any one of claims 1 to 10, wherein the first connection end and the third connection end of the electric connection assembly are connected to two electrical assemblies in adjacent accommodating cavities, respectively; and the first housing is accommodated in the avoidance space.

12. The battery pack according to claim 11, wherein the at least two accommodating cavities comprise:
a power distribution cavity, accommodating a power distribution assembly; and
a battery cavity adjacent to the power distribution cavity, wherein a battery assembly is accommodated in the battery cavity; wherein
the first connection end of the electric connection assembly is electrically connected to the power distribution assembly, and the third connection end of the electric connection assembly is electrically connected to the battery assembly.

13. The battery pack according to claim 11, wherein the at least two accommodating cavities comprise two adjacent battery cavities, and the battery cavities each accommodate a battery assembly; and
the first connection end and the third connection end of the electric connection assembly are electrically connected to two battery assemblies in adjacent battery cavities, respectively.

14. The battery pack according to claim 12 or 13, wherein the tray comprises a bottom plate, a plurality of side beams, and a plurality of cross beams, the plurality of side beams are all connected to the bottom plate and arranged along a circumferential direction of the bottom plate, and the plurality of side beams and the bottom plate jointly define the accommodating space; and
the plurality of cross beams are disposed in the accommodating space and are spaced to partition the accommodating space into the plurality of accommodating cavities that are independent of each other.

15. The battery pack according to claim 14, wherein one side of the cross beam is fastened to the bottom plate, and the avoidance space is a notch formed on the other opposite side of the cross beam and penetrating through the cross beam; and a holding portion corresponding to the first housing is formed on an inner wall of the notch.

16. An electric apparatus, comprising an electric device and the battery pack according to any one of claims 11 to 15, wherein the battery pack is electrically connected to the electric device to supply power to the electric device.
